# EUROPÄISCHE PATENTSCHRIFT

(11) **EP 0 978 095 B1**
(45) Veröffentlichungstag und Bekanntmachung des Hinweises auf die Patenterteilung: **28.11.2001**
(21) Anmeldenummer: 97935498.2
(22) Anmeldetag: 31.07.1997
(51) Int. Cl.: G06K 19/077

(54) **CHIPKARTE**
CHIP CARD
CARTE A PUCE

(30) Priorität: 01.08.1996 DE 19631166
(43) Veröffentlichungstag der Anmeldung: 09.02.2000
(73) Patentinhaber: Infineon Technologies AG, 81669 München (DE)
(72) Erfinder: DLUGOSCH, Dieter, D-91560 Heilsbronn (DE); PRASS, Roland, D-91242 Ottensoos (DE); KIRSCHBAUER, Josef, D-93476 Blaibach (DE); DIDSCHIES, Günter, D-90427 Nürnberg (DE)
(74) Vertreter: Zedlitz, Peter, Dipl.-Inf.
(86) Internationale Anmeldenummer: DE9701626
(87) Internationale Veröffentlichungsnummer: WO9806060

(56) Entgegenhaltungen:
- EP-A- 0 343 030
- EP-A- 0 688 051
- DE-C- 4 441 931
- PATENT ABSTRACTS OF JAPAN vol. 015, no. 010 (M-1068), 10.Januar 1991 & JP 02 261696 A (TOPPAN PRINTING CO LTD), 24.Oktober 1990,
- PATENT ABSTRACTS OF JAPAN vol. 015, no. 443 (M-1178), 12.November 1991 & JP 03 187792 A (TOSHIBA CORP), 15.August 1991,

## Beschreibung

Die Erfindung betrifft eine Chipkarte bestehend aus einem Kunststoffkartenkörper mit einem mechanisch befestigten Chip, dessen Kontaktierung mittels eines leadframes geschieht. Das leadframe stellt galvanische Kontakte zur Kontaktierung nach außen dar, gewährleistet die elektrische Kontaktierung zum Chip und ist im Bereich der galvanischen Kontakte in Form von Kontaktfahnen ausgebildet.

Ein allgemeines Problem bei der Herstellung von Chipkarten mit einem Leadframe ist die dauerhafte und betriebssichere Verbindung zwischen Chip, das Leadframe enthaltende Chipmodul oder dem Leadframe und dem Kunststoffkartenkörper auf der anderen Seite. Der Chip selbst wird in der Regel in eine Aussparung innerhalb des Kunststoffkartenkörpers eingeklebt und weist Versteifungselemente auf, die über den im Betrieb beispielsweise gebogenen Kunststoffkartenkörper eingebracht werden. Die Plazierung der galvanischen Kontakte relativ zum Chip kann unterschiedlich sein. Dabei kann beispielsweise ein sog. Chipmodul eine Steifigkeit aufweisen, die Beschädigungen am Chip und an den auf dem Chipmodul vorliegenden Kontakten verhindert. Werden jedoch die galvanischen Kontakte relativ weit nach außen vom Chip weg angeordnet, so ergeben sich Probleme aufgrund von mangelnder Biegefestigkeit oder Zugfestigkeit von Kontaktfahnen an den Verbindungsstellen im Bereich der galvanischen Kontakte. Darüber hinaus können Fehler in Klebstoffverbindungen durch den kritischen Reaktionsmechanismus von verschiedenen schnell härtenden Klebstoffen auftreten. Die Klebeverbindung kann weiterhin altern oder verspröden. Somit könnte es zu einem Aufbiegen und Hochstehen der Ränder eines leadframes im Außenbereich kommen.

Die im Stand der Technik existierenden Chipkarten werden beispielsweise durch vollflächiges Verkleben eines Grundkörpers mit schnell reagierenden Klebstoffen oder durch entsprechendes Prägen ausgebildet.

In der Deutschen Patentanmeldung mit der Anmeldenummer P 195 27 331.1 wird eine Chipkarte beschrieben, die einen Plastikkartenkörper umfaßt, in dem ein Halbleiterchip angeordnet ist, wobei der Halbleiterchip mit einem Leadframe elektrisch verbunden ist, das Kontaktfahnen bildet, die zumindest teilweise mit einem dem Halbleiterchip umgebenden Kunststoffkörper in Kontakt sind. Die Kontaktfahnen weisen in der Nähe des Kunststoffkörpers einen flexiblen Bereich auf. Durch diese Form der Anordnung von Halbleiterchip und galvanischen Kontakten in dem Kartengrundkörper ist nicht sichergestellt, daß Biegungen der Chipkarte nicht zu bleibenden Verformungen an den Kontakten (Leadframe) führen, so daß die Enden der Kontaktfahnen hochstehen könnten.

Aus der DE 44 41 931 C1 ist eine Chipkarte bekannt, die neben einem Plastikkartenkörper einen darin enthaltenen und mechanisch befestigten Halbleiterchip beinhaltet, der nach außen hin elektrisch über galavanische Kontakte kontaktierbar ist. Die galvanischen Kontakte sind Teil eines Leadframes, die mit dem Halbleiterchip kontaktiert sind. Nach außen hin ist das Leadframe in Form von Kontaktfahnen ausgebildet. Diese verlaufen parallel an der Oberfläche der großflächigen Seite der Chipkarte. Die Kontaktfahnen enden nach der für die Kontaktierung vorgesehenen Fläche. Der Anspruch 1 ist von diesem Dokument abgegrenzt.

Die Aufgabe der vorliegenden Erfindung besteht in der Bereitstellung einer Chipkarte mit Halbleiterchip und Leadframe, wobei die gesamte Anordnung auch bei Einbringung von mechanischen Spannungen aufgrund von Verbiegungen der Kunststoffkarte nicht beschädigt wird und betriebssicher arbeitet.

Die Lösung dieser Aufgabe geschieht durch die Merkmale des Anspruchs 1.

Der Erfindung liegt die Erkenntnis zugrunde, daß ein Leadframe für eine Chipkarte ausgehend von der elektrischen Kontaktierung zum Chip die oberflächlich verlaufenden galvansichen Kontakte aufweist und darüber hinaus nach außen derart verlängert ist, daß die äußeren Enden dieses Leadframes in das innere des Kunststoffkartenkörpers eingebettet werden können. Die Einbettung geschieht derart, daß die äußeren Enden annähernd parallel zu den großflächigen Seiten der Chipkarte verlaufen. Somit sind die im Bereich der galvanischen Kontakte befindlichen Ränder mit den Kunststoffkartenkörper verbunden und können nicht aufgebogen werden.

In einer vorteilhaften Ausgestaltung der Erfindung ist zwischen den galvanischen Kontakten und den äußeren eingebetteten Enden der Kontaktfahnen jeweils eine Sicke angeordnet. Diese ungefähr v-förmige Ausgestaltung im Leadframe stellt ein Mittel zum Ausgleich von mechanischen Spannungen dar. Werden beispielsweise die Anschlußfahnen durch Biegen des Kartengrundkörpers mitgebogen, so kann diese v-oder u-förmige Konstruktion des Leadframes dadurch aufgebrachte Spannungen aufnehmen bzw. abbauen, so daß an keiner Stelle des inneren Bereiches die Zug- oder Biegefestigkeit überschritten wird. Zur einwandfreien Funktion der Entlastungsicke kann diese vorteilhaft in einem nicht umspritzten Zustand innerhalb einer Aussparung des Kunststoffkartenkörpers angeordnet sein.

Zur einfachen Handhabung bei der Herstellung einer Chipkarte kann beispielsweise mittels eines sog. Spritzrahmens eine Einbettung der äusseren Enden der Kontaktfahnen erzeugt werden. Dieser Spritzrahmen wird in den Kunststoffkartenkörper in eine entsprechende Aussparung entweder eingeklebt oder mit diesem verschweißt. Bei der Betrachtung einer zweigeteilten Chipkarte, die beispielsweise aus einem Kartenunterteil und einem Kartenoberteil hergestellt wird, können die äußeren Enden des Leadframes bzw. der Kontaktfahnen zwischen dem Oberteil und dem Unterteil plaziert werden. Hierzu ist in einem der beiden Teile eine entsprechende Aussparung vorzusehen. Die äußeren eingebetteten Enden der Kontaktfahnen können fixiert oder parallel zu den großflächigen Seiten der Chipkarte bewegbar sein, nachdem der Halbleiterchip in den Kunststoffkartenkörper eingeklebt wurde. Nachdem der Halbleiter-chip in den Kunststoffkartenkörper eingeklebt ist, bleibt die Fixierung von Halbleiterchip und leadframe erhalten. Zur Verbesserung der Biegefähigkeit der Chipkarte ohne störende mechanische Spannungen auf leadframe und Chip zu übertragen, sind zunächst die Entlastungsicken vorgesehen. Falls deren Arbeitsbereich nicht ausreicht, können die äußeren Enden der Kontaktfahnen im Kunststoffkartenkörper anstelle einer Fixierung gleitend gelagert sein. Dies bedeutet, daß sie entweder im Spritzrahmen in der beschriebenen Richtung gleiten können oder zwischen dem Kartenoberteil und dem Kartenunterteil in entsprechender Richtung bewegbar sind.

Im folgenden wird anhand von schematischen Figuren ein Ausführungsbeispiel beschrieben.

Figur 1 zeigt den Schnitt durch eine Chipkarte, wobei ein Spritzrahmen integral vorhanden ist,

Figur 2 zeigt einen zweiteiligen Chipkartenkörper, wobei die äußeren Enden von Kontaktfahnen zwischen einem Kartenober- und einem Kartenunterteil gelagert sind.

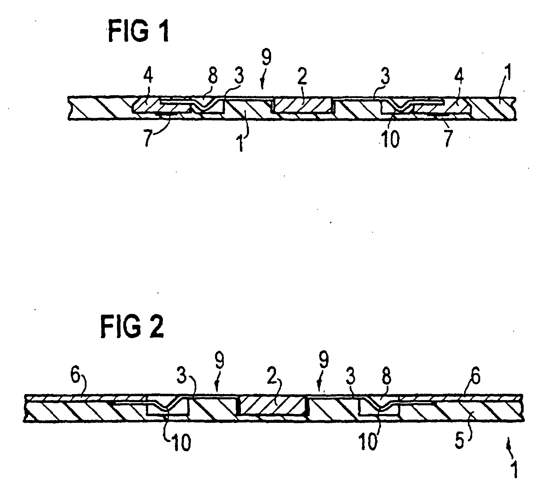

In der Figur 1 wird ein aus einem Chip 2 und einem Leadframe 3 bestehendes Chipmodul dargestellt, das mit einem Spritzrahmen 4 versehen ist. Zwischen den darin gelagerten Enden der äußeren Anschlußfahnen, die Bestandteil des Leadframes sind, sind mit dem Bereich der galvanischen Kontakte 9 über die Sicken 10 verbunden. Die Sicken 10 befinden sich in Aussparungen 8. Der Spritzrahmen 4 ist in diesem Fall mittels eines Klebstoffes 7 in den Kunststoffkartenkörper 1 eingeklebt. Somit ist der Halblleiterchip 2, der beispielsweise separat kunststoffumhüllt ist über das Leadframe 3 mit galvanischen Kontakten verbunden, die in betriebssicherer Art und Weise in ihrem äußeren Bereich gegen Verbiegungen geschützt sind.

Figur 2 zeigt eine zweiteilige Chipkarte mit einem Kartenunterteil 5 und einem Kartenoberteil 6, wobei wiederum ein Halbleiterchip 2 mit einem Leadframe 3 verbunden ist. Die galvanischen Kontakte 9 sind ebenfalls im Anschluß an den Halbleiterchip 2 nach außen hin positioniert und verlaufen oberflächlich auf dem Kunststoffkartenkörper 1. Des weiteren sind Sicken 10 in Aussparungen 8 vorhanden, um Biege- oder Zugbeanspruchungen vom Leadframe 3 und vom Chip 2 fernzuhalten. Die äußeren Enden des Leadframes 3 sind analog zu Figur 1 im Kunststoffkartenkörper eingebettet, wobei sie zwischen Kartenunterteil und Kartenoberteil 5, 6 plaziert sind. Die für die äußeren Enden der Kontaktfahnen vorgesehenen Aussparungen im Kartenunterteil 5 können für den Fall, daß die eingebetteten Kontaktfahnen lateral bewegbar sind, parallel zu einer großflächigen Seite des Kunststoffkartenkörpers größer ausgebildet sein, als es durch die anfängliche Ausbildung der Kombination von Halbleiterchip und Leadframe 3 notwendig ist. Somit können beispielsweise Materialdehnungen am Leadframe abgefangen werden.

Durch die Konstruktion einer Chipkarte entsprechend der Erfindung haben der Halbleiterchip 2, der innere Leadframebereich und der Kunststoffkartenkörper 1 keine feste Verbindung miteinander, wodurch Ausgleichsbewegungen zugelassen werden.

Im Falle der Figur 1 kann das Spritzen zu Herstellung der Chipkarte in einem Arbeitsgang mit dem Umhüllen des Chips geschehen. Hierzu wird beispielsweise ein Epoxidharz, das gut klebbar ist, eingesetzt. Die Vorteile gegenüber den Stand der Technik sind beispielsweise ein Dehnungsausgleich bei einer Biegebelastung durch die Entlastungssicke und durch einen Freiraum in der Fügezone. Weiterhin kann das umspritzte leadframe in Verbindung mit dem Kunststoffkartenkörper so gestaltet sein, daß eine mechanische Fixierung bei der Montage erfolgt. Damit können langsam reagierende oder permanent klebrige Klebstoffsysteme zum Einsatz kommen, bei denen die momentan auftretenden Probleme, wie Versprödung, Feuchteempfindlichkeit usw. nicht gegeben sind. Ein Hochstehen der Leadframe-Ränder ist nicht mehr möglich.

Anstelle der Klebeverbindung kann der Spritzrahmen 4 auch geschweißt werden. Zum Einsatz können Ultraschall- oder Orbital-Reib-Schweißverfahren kommen. Daraus lassen sich weitere Vorteile, wie beispielsweise eine großflächige Verbindung oder Handhabungsvorteile durch Wegfall des Klebstoffes erzielen.

Bei der zweiteiligen Chipkarte werden ebenfalls die Bestandteile verschweißt, verklebt oder anderweitig laminiert. Bei diesem Prozeß wird das Leadframe 3 zwischen Kartenober- und Kartenunterteil 5, 6 einlaminiert. Das Kartenoberteil 6 kann hierbei als einfaches Stanzteil gestaltet sein. Diese Ausgestaltung ensprechend Figur 2 kann gegenüber einer Ausgestaltung entsprechend Figur 1 wirtschaftliche Vorteile aufweisen.

## Patentansprüche

1. Chipkarte bestehend aus einem Kunststoffkartenkörper (1) mit einem darin enthaltenen und mechanisch befestigten Halbleiterchip (2), der nach außen hin elektrisch über galvanische Kontakte (9) kontaktierbar ist, wobei ein Leadframe (3), das mit dem Halbleiterchip (2) elektrisch kontaktiert ist, in Form von Kontaktfahnen ausgebildet ist, die galvanische Kontakte bilden, **dadurch gekennzeichnet, dass** die vom Halbleiter-Chip (2) abgewandten, äußeren Enden der Kontaktfahnen im Inneren des Kunststoffkartenkörpers (1) angeordnet sind und annähernd parallel zu des-sen großflächigen Seiten verlaufen, und dass die an der Oberfläche verlaufenden Bereiche der Kontaktfahnen nicht fest mit dem Kunststoffkartenkörper (1) verbunden sind.

2. Chipkarte nach Anspruch 1, worin zwischen dem Bereich der Kontakte (9) und den äußeren Enden der Kontaktfahnen jeweils eine Sicke(10) zum Ausgleich von mechanischen Spannungen vorhanden ist.

3. Chipkarte nach Anspruch 1 oder 2, worin die äußeren Enden der Kontaktfahnen in einem Spritzrahmen (4) gelagert sind, der in den Kunststoffkartenkörper (1) integriert ist.

4. Chipkarte nach Anspruch 1 oder 2, worin die äußeren Enden der Kontaktfahnen zwischen einem Kartenunterteil (5) und einem Kartenoberteil (6) plaziert sind.

5. Chipkarte nach einem der vorhergehenden Ansprüche, worin die äußeren Enden der Kontaktfahnen im Kunststoffkartenkörper (1) fixiert sind.

6. Chipkarte nach einem der Ansprüche 1 bis 4, worin die äußeren im Inneren des Kunststoffkartenkörpers (1) verlaufenden Enden der Kontaktfahnen parallel zu den großflächigen Seiten des Kunststoffkartenkörpers (1) bewegbar gelagert sind.

## Claims

1. Smart card comprising a plastic card body (1) with a semiconductor chip (2) which is contained and mechanically fastened therein, which can be contacted electrically from the outside via direct-current contacts (9), a leadframe (3), which is contacted electrically by the semiconductor chip (2), being designed in the form of contact tabs which form direct-current contacts, **characterized in that** the outer ends of the contact tabs, which ends face away from the semiconductor chip (2), are arranged in the interior of the plastic card body (1) and run approximately parallel to its large-area sides, and **in that** those regions of the contact tabs which run on the surface are not fixedly connected to the plastic card body (1).

2. Smart card according to Claim 1, in which, between the region of the contacts (9) and the outer ends of the contact tabs, there is in each case a bead (10) to compensate for mechanical stresses.

3. Smart card according to Claim 1 or 2, in which the outer ends of the contact tabs are mounted in an injection-moulded frame (4), which is integrated in the plastic card body (1).

4. Smart card according to Claim 1 or 2, in which the outer ends of the contact tabs are placed between a lower card part (5) and an upper card part (6).

5. Smart card according to one of the preceding claims, in which the outer ends of the contact tabs are fixed in the plastic card body (1).

6. Smart card according to one of Claims 1 to 4, in which the outer ends of the contact tabs, which ends run in the interior of the plastic card body (1), are mounted such that they can move parallel to the large-area sides of the plastic card body (1).

## Revendications

1. Carte à puce constituée d'un élément (1) en matière plastique formant carte comportant une puce (2) à semiconducteur, qui y est contenue et fixée mécaniquement et qui est mise en contact vers l'extérieur du point de vue électrique par l'intermédiaire de contacts (9) galvaniques,
une grille (3) de connexion, qui est en contact électrique avec la puce (2) à semiconducteur, étant réalisée en forme d'oreilles de contact qui forment des contacts galvaniques, **caractérisée en ce que** les extrémités extérieures, éloignées de la puce (2) à semiconducteur, des oreilles de contact sont disposées à l'intérieur de l'élément (1) en matière plastique formant carte et s'étendent à peu près parallèlement à ses faces de grande surface, et **en ce que** les zones des oreilles de contact s'étendant à la surface ne sont pas reliées de manière fixe à l'élément (1) en matière plastique formant carte.

2. Carte à puce suivant la revendication 1, dans laquelle il est présent entre la région des contacts (9) et les extrémités extérieures des oreilles de contact chaque fois une moulure (10) pour compenser des contraintes mécaniques.

3. Carte à puce suivant la revendication 1 ou 2, dans laquelle les extrémités extérieures des oreilles de contact sont montées dans un cadre (4) d'injection, qui est intégré à l'élément (1) en matière plastique formant carte.

4. Carte à puce suivant la revendication 1 ou 2, dans laquelle les extrémités extérieures des oreilles de contact sont placées entre une partie (5) inférieure de carte et une partie (6) supérieure de carte.

5. Carte à puce suivant l'une des revendications précédentes, dans laquelle les extrémités extérieures des oreilles de contact sont immobilisées dans l'élément (1) en matière plastique formant carte.

6. Carte à puce suivant l'une des revendications 1 à 4, dans laquelle les extrémités extérieures, s'étendant à l'intérieur de l'élément (1) en matière plastique formant carte, des oreilles de contact sont montées de manière à être mobiles parallèles aux faces à grande surface de l'élément (1) en matière plastique formant carte.
